# FASCICULE DE BREVET EUROPEEN

(11) **EP 1 306 978 B1**
(45) Date de publication et mention de la délivrance du brevet: **25.05.2005**
(21) Numéro de dépôt: 01125321.8
(22) Date de dépôt: 26.10.2001
(51) Int. Cl.: H04B 1/30, H04L 25/06

(54) **Récepteur à conversion directe pour un système de communication utilisant une modulation à enveloppe non constante**
Direktmischempfänger für einem Kommunikationssystem mit nicht konstanter Hüllkurve
Direct conversion receiver for a communication system using a non-constant envelope modulation

(43) Date de publication de la demande: 02.05.2003
(73) Titulaire: STMicroelectronics N.V., 1077 XX Amsterdam (NL)
(72) Inventeur: Conti, Patrick, 74250 Saint Jean de Tholome (FR)
(74) Mandataire: Casalonga, Axel

(56) Documents cités:
- EP-A- 0 806 841
- EP-A- 0 840 484
- US-A- 5 749 051
- US-A- 6 144 243

## Description

L'invention concerne d'une façon générale les systèmes de communication sans fil, et notamment les systèmes CDMA.

Dans un système de communication sans fil, une station de base communique avec une pluralité de terminaux distants, tels que des téléphones mobiles cellulaires. Les accès multiples par division de fréquence (FDMA : "Fréquency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

Par ailleurs, un signal GSM est un signal modulé en phase qui a une enveloppe constante. En d'autres termes, l'amplitude de la modulation est constante.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un terminal distant d'un autre.

Avant d'émettre un signal sur le canal de transmission à destination d'un terminal distant, le signal a été embrouillé et étalé ("spread " en langue anglaise) par la station de base en utilisant le code d'embrouillage de la station de base et le code OVSF du terminal distant.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

A l'opposé des systèmes de communication ayant une modulation à enveloppe constante, comme le système GSM, les systèmes CDMA utilisent un signal modulé qui a une modulation à enveloppe non constante. En d'autres termes, un tel signal est modulé en phase et en amplitude et l'amplitude de la modulation n'est pas constante.

L'invention concerne en général les systèmes de communication utilisant une modulation à enveloppe non constante et elle s'applique ainsi avantageusement aux systèmes de communication du type CDMA, et plus particulièrement aux systèmes du type CDMA-FDD.

Dans un terminal d'un système de communication sans fil, la conversion directe, ou transposition à fréquence intermédiaire nulle, est une alternative à une architecture superhétérodyne, et est particulièrement bien adaptée pour permettre des solutions architecturales très fortement intégrées pour ce terminal.

Un récepteur à conversion directe, ou bien un récepteur à fréquence intermédiaire nulle (récepteur zéro-IF) convertit la bande du signal utile directement autour de la fréquence nulle (bande de base) au lieu de le convertir à une fréquence intermédiaire de l'ordre de quelques centaines de MHz.

Ceci étant, alors qu'un récepteur à conversion directe est l'architecture radiofréquence la plus intéressante, non seulement parce qu'elle permet d'obtenir de très hauts niveaux d'intégration en réduisant le nombre de composants externes, mais également pour sa capacité à autoriser des réceptions multinormes, une telle architecture présente malheureusement quelques inconvénients tels qu'un décalage de tension continue ("DC offset", en langue anglaise) et une distorsion du second ordre.

Deux types différents de décalages de tension continue doivent être considérés, à savoir un décalage statique ou temporellement invariable, et un décalage temporellement variable ou dynamique.

Le décalage statique est dû aux erreurs d'appariement dans le procédé de fabrication du récepteur tandis que le décalage dynamique vient principalement des caractéristiques non linéaires et des fuites entre les entrées des mélangeurs du récepteur.

Et, ce décalage en tension ajouté au signal transposé peut être suffisamment important pour saturer les étages d'amplification à fort gain, provoquant alors une perte d'information, ce qui augmente de façon significative le taux erreur bit (BER; "bit error rate", en langue anglaise).

Toutes les solutions à ce problème développées pour des modulations à enveloppe constante, comme par exemple dans les systèmes GSM et comme par exemple décrit dans EP-A-0 806 841, ne sont pas adaptées à des systèmes utilisant une modulation à enveloppe non constante, comme par exemple les systèmes CDMA-FDD.

L'invention vise à remédier à cette lacune.

Un but de l'invention est de permettre, au sein d'un récepteur à conversion directe, l'élimination des décalages de tensions continues statiques et dynamiques, et ce, à haute vitesse et en permanence.

L'invention a également pour but de réduire le nombre de composants externes du récepteur à conversion directe de façon à obtenir une solution à haut niveau d'intégration, qui soit structurellement indépendante de l'étage numérique du récepteur, de façon à être compatible avec la majeure partie des terminaux existants.

Telle que revendiquée, l'invention propose donc un récepteur à conversion directe pour un système de communication utilisant une modulation à enveloppe non constante, ce récepteur comprenant un étage analogique pour recevoir un signal incident d'un canal de transmission, et comportant des moyens de transposition et des moyens d'amplification à gain programmable ; le récepteur comprend en outre au moins un module de compensation possédant une borne d'entrée et une borne de sortie connectées entre la sortie des moyens de transposition et l'entrée des moyens d'amplification, et apte à compenser à la fois un décalage statique de tension continue et un éventuel décalage dynamique de tension continue de l'étage analogique ; le module de compensation comporte
- des premiers moyens aptes à déterminer l'enveloppe de la composante alternative du signal présent à la borne d'entrée du module,
- des deuxièmes moyens aptes à déterminer l'enveloppe du signal présent à la borne d'entrée du module,
- des premiers moyens de soustraction connectés à la sortie des premiers moyens et à la sortie des deuxièmes moyens,
- des deuxièmes moyens de soustraction formant la borne de sortie du module, et possédant une première entrée connectée aux moyens de transposition, et une deuxième entrée connectée à la sortie des premiers moyens de soustraction.

Selon un mode de réalisation, le module de compensation comporte en outre un échantillon-bloqueur connecté à la sortie des premiers moyens de soustraction, et la deuxième entrée des deuxièmes moyens de soustraction est connectée à la sortie de l'échantillonneur-bloqueur.

Les premiers moyens comportent avantageusement un filtre passe-haut dont la fréquence de coupure est comprise entre le quart de la fréquence de modulation et la moitié de la fréquence de modulation. Ainsi, lorsque la fréquence de la modulation est égale à 3,84 MHz, on pourra choisir par exemple un filtre passe-haut dont la fréquence de coupure est de l'ordre de 1,5 MHz.

Généralement, l'étage analogique comporte en outre des moyens de filtrage passe-bas situés en aval des moyens de transposition. La borne d'entrée du module de compensation est alors située de préférence en aval des moyens de filtrage passe-bas, ce qui permet d'éliminer les sources parasites haute fréquence et d'améliorer encore l'évaluation de la tension de décalage continue.

Généralement, l'étage analogique comporte également deux voies de traitement traitant des signaux en quadrature (signaux I et Q selon une dénomination bien connue de l'homme du métier). Bien qu'il soit possible d'utiliser deux modules de compensation respectivement connectés sur les deux voies de traitement, on peut envisager que le récepteur ne comporte qu'un seul module de compensation dont la borne d'entrée est connectée sur l'une des deux voies de traitement et dont la borne de sortie est connectée sur chacune des voies de traitement. En effet, généralement, l'appartement des différents blocs radiofréquence du récepteur est relativement bon sur la pastille de silicium.

L'invention a également pour objet un terminal distant d'un système de communication utilisant une modulation à enveloppe non constante, par exemple un téléphone mobile cellulaire, comportant un récepteur tel que défini ci-avant.

Telle que revendiquée, l'invention propose également un procédé de traitement d'un signal incident au sein d'un récepteur à conversion directe d'un système de communication utilisant une modulation à enveloppe non constante, ce procédé comprenant une réception du signal incident provenant d'un canal de transmission, une transposition de fréquence et une amplification à gain programmable ; on élabore en outre à partir d'un signal prélevé après transposition, un signal de compensation représentatif d'un décalage statique de tension continue et d'un éventuel décalage dynamique de tension continue de l'étage analogique, et on soustrait avant amplification, ce signal de compensation, du signal émanant du signal transposé ; l'élaboration du signal de compensation comporte
- une détermination de l'enveloppe de la composante alternative du signal prélevé,
- une détermination de l'enveloppe du signal prélevé,
- une soustraction entre les deux enveloppes.

Selon un mode de mise en oeuvre de l'invention, l'élaboration du signal de compensation comporte en outre un échantillonnage-blocage du signal soustrait.

La détermination de l'enveloppe de la composante alternative du signal prélevé comporte avantageusement un filtrage passe-haut dont la fréquence de coupure est comprise entre le quart de la fréquence de la modulation et la moitié de la fréquence de la modulation.

Par ailleurs, on élabore de préférence le signal de compensation à partir du signal prélevé après un filtrage passe-bas effectué après transposition.

En outre, on peut élaborer le signal de compensation à partir d'un signal prélevé sur l'une seulement des voies de traitement du récepteur, et on le délivre alors aux deux voies de traitement.

D'autres avantages et caractéristiques de l'invention apparaîtront à l'examen de la description détaillée de modes de mise en oeuvre et de réalisation, nullement limitatifs et des dessins annexés sur lesquels :
- la figure 1 illustre schématiquement un récepteur selon l'invention, et,
- la figure 2 illustre plus particulièrement mais toujours schématiquement la structure d'un module de compensation d'un récepteur selon l'invention.

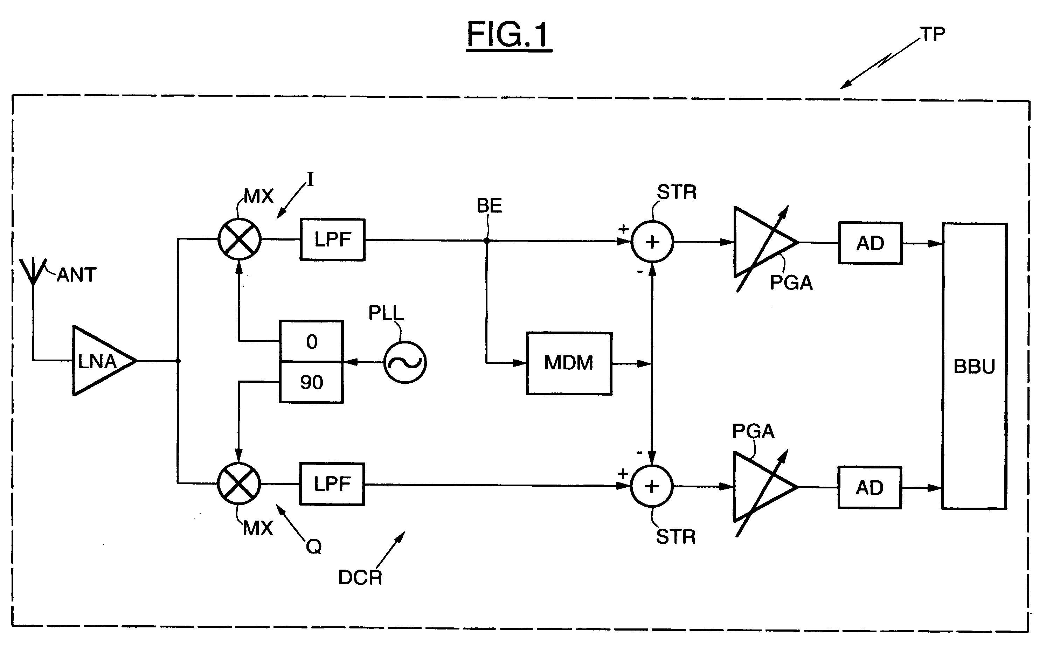

Sur la figure 1, la référence TP désigne un terminal distant tel qu'un téléphone mobile cellulaire qui est en communication avec une station de base. Le téléphone cellulaire TP comporte un récepteur à conversion directe DCR connecté à une antenne ANT pour recevoir un signal incident émanant d'un canal de transmission.

Le récepteur à conversion directe comporte un étage analogique connecté à un étage numérique ou unité de traitement en bande de base, BBU, à travers un étage de conversion analogique numérique AD.

Classiquement, l'étage analogique comporte un amplificateur à faible bruit LNA et deux voies de traitement possédant des mélangeurs MX (ou moyens de transposition), des filtres passe-bas classiques LPF et des amplificateurs à gain programmable PGA.

Les deux mélangeurs MX reçoivent respectivement d'une boucle à verrouillage de phase PLL deux signaux présentant mutuellement une différence de phase de 90 degrés. Après transposition de fréquence dans les mélangeurs, les deux voies de traitement définissent respectivement deux flux I et Q selon une dénomination bien connue de l'homme du métier. Puisque le récepteur est un récepteur à conversion directe, le signal reçu est transposé en bande de base puis filtré et amplifié en bande de base.

Après conversion numérique dans les convertisseurs AD, les deux flux numériques I et Q sont délivrés à l'étage de traitement numérique BBU.

Cet étage de traitement numérique est bien connu de l'homme du métier et comporte notamment des moyens d'estimation de canal, des moyens de démodulation ainsi que des moyens de décodage de source. Par ailleurs, le gain programmable des amplificateurs PGA est commandé par l'étage de traitement numérique.

Selon ce mode de réalisation de l'invention, le récepteur DCR comporte en outre un module de compensation formé ici d'un bloc MDM et d'un soustracteur STR connecté sur chaque voie de traitement en amont de l'amplificateur PGA correspondant. Par ailleurs, alors que le soustracteur STR forme la borne de sortie du module de compensation, la borne d'entrée BE de ce module de compensation est située ici sur la voie de traitement I en amont du filtre passe-bas LPF disposé après le mélangeur MX.

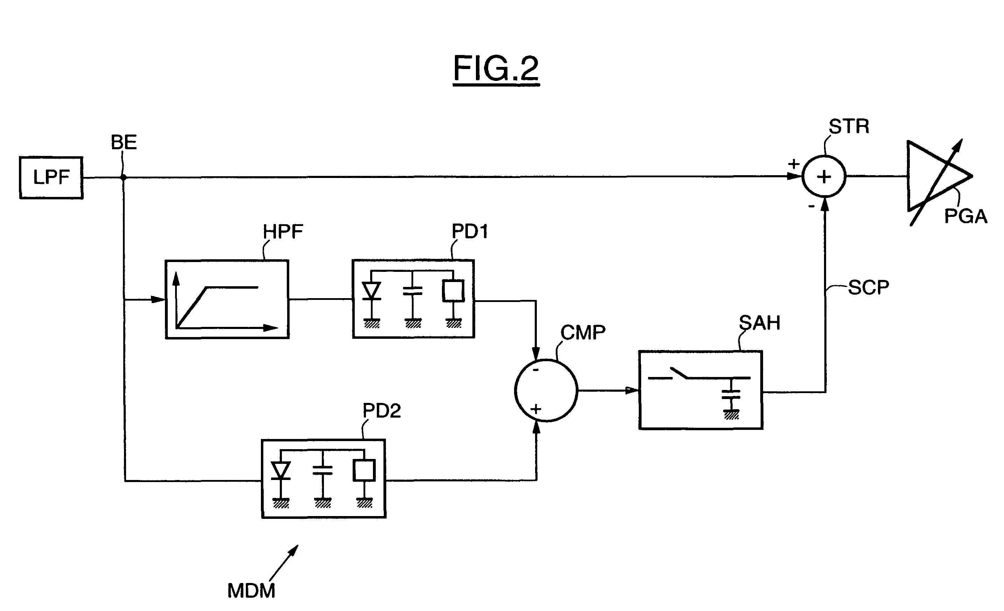

Comme illustré sur la figure 2, le bloc MDM comporte un filtre passe-haut HPF dont la fréquence de coupure est avantageusement comprise entre le quart de la fréquence de la modulation et la moitié de la fréquence de la modulation.

Ainsi, on pourra choisir une fréquence de coupure de 1,5 MHz pour un système CDMA-FDD par exemple, dont la fréquence de la modulation est égale à 3,84 MHz. L'entrée de ce filtre passe-haut HPF est reliée à la borne d'entrée BE du module de compensation et est connectée juste après le filtre passe-bas LPF. Ce filtre passe-bas permet ainsi d'éliminer les sources parasites haute fréquence et favorise ainsi l'estimation du décalage de tension continue et par conséquent son élimination.

A la sortie du filtre HPF, toute l'information continue a été retirée du signal modulé présent à la borne d'entrée BE.

Ce filtre passe-haut HPF est suivi d'un détecteur de crête PD1, de structure classique et connu en soi. Ce détecteur de crête permet de déterminer l'enveloppe de la composante alternative du signal prélevé à la borne d'entrée BE. Le détecteur de crête a une pente au sommet ("droop rate", en langue anglaise) adaptée au taux de fragment ("cheap rate", en langue anglaise) du signal.

On rappelle ici, qu'avant transmission via l'antenne de la station de base, le signal initial contenant les informations (symbole) est embrouillé ("scrambled", en langue anglaise) et étalé ("spread", en langue anglaise) par les moyens de traitement de la station de base, en utilisant le code d'embrouillage de la station de base et le code orthogonal (code OVSF) du téléphone TP.

En conséquence, les symboles sont transformés en fragments ("chips", en langue anglaise) ayant une longueur prédéterminée (par exemple égale à 260 nanosecondes) et correspondant à un taux de fragments prédéterminé ("chip rate", en langue anglaise) égal par exemple à 3,84 Mcps pour la norme WCDMA-FDD. Ainsi, le taux de fragment est plus grand que le taux de symbole ("symbol rate" en langue anglaise).

Ainsi, un symbole peut être transformé en un nombre de fragments pouvant aller de 4 à 256.

Dans l'exemple décrit ici, pour un taux de fragment égal à 3,84 Mcps, on choisira une pente au sommet pour le détecteur de pics PD1 égale à 10 mV / 2µs.

Le bloc MDM comporte par ailleurs un autre détecteur de crête PD2, connecté directement à la borne d'entrée BE, et destiné à déterminer l'enveloppe du signal prélevé à la borne d'entrée BE.

Un premier soustracteur CMP soustrait le signal issu du détecteur de crête PD1 du signal issu du détecteur de crête PD2 et délivre donc un signal de sortie représentatif de la tension de décalage continue de l'étage analogique, que cette tension de décalage soit statique ou dynamique.

Un échantillonneur-bloqueur SAH, de structure classique et connu en soi, maintient l'information extraite du soustracteur CMP à une fréquence déterminée par un signal d'horloge CLK. Ce signal d'horloge CLK peut être produit continûment ou activé dans des conditions spécifiques, comme par exemple lorsque le bit de poids fort du convertisseur numérique AD est actif. En d'autres termes, l'information issue de l'échantillonneur-bloqueur peut n'être rafraîchie qu'à des instants choisis.

La fréquence du signal d'horloge CLK est choisie en fonction du taux de fragments ("chip rate"). Ainsi, pour une longueur de fragment de 266 nanosecondes, on pourra choisir une période pour le signal d'horloge de l'ordre de dix microsecondes. Ceci étant, dans le cas où l'on procède à des rafraîchissements à des instants choisis, le signal d'horloge CLK peut consister en des trains d'impulsions plus ou moins rapprochées.

La présence de l'échantillonneur-bloqueur SAH permet notamment de s'affranchir du bruit résultant de la détection des enveloppes des différents signaux , et d'éviter toute perte d'informations de la modulation à basse fréquence.

Le signal de compensation SCP délivré par l'échantillonneur-bloqueur SAH est alors soustrait, dans le soustracteur STR, au signal émanant directement du filtre passe-bas LPF.

En sortie du soustracteur, le signal est par conséquent débarrassé de tout décalage de tension continue.

## Revendications

1. Récepteur à conversion directe pour un système de communication utilisant une modulation à enveloppe non constante, comprenant un étage analogique pour recevoir un signal incident d'un canal de transmission et comportant des moyens de transposition (Mx) et des moyens d'amplification à gain programmable (PGA), au moins un module de compensation (MDM, STR) possédant une borne d'entrée (BE) et une borne de sortie (STR) connectées entre la sortie des moyens de transposition (Mx) et l'entrée des moyens d'amplification (PGA), et apte à compenser à la fois un décalage statique de tension continue et un éventuel décalage dynamique de tension continue de l'étage analogique, le module de compensation comportant
- des premiers moyens (MPF, PD1) aptes à déterminer l'enveloppe de la composante alternative du signal présent à la borne d'entrée du module,
- des deuxièmes moyens (PD2) aptes à déterminer l'enveloppe du signal présent à la borne d'entrée du module,
- des premiers moyens de soustraction (CMP) connectés à la sortie des premiers moyens et à la sortie des deuxièmes moyens,
- des deuxièmes moyens de soustraction (STR) formant la borne de sortie du module, et possédant une première entrée connectée aux moyens de transposition, et une deuxième entrée connectée à la sortie des premiers moyens de soustraction (CMP).

2. Récepteur selon la revendication 1, **caractérisé par le fait que** le module de compensation comporte en outre un échantillonneur-bloqueur (SAH) connecté à la sortie des premiers moyens de soustraction (CMP), et **par le fait que** la deuxième entrée des deuxièmes moyens de soustraction (STR) est connectée à la sortie de l'échantillonneur-bloqueur.

3. Récepteur selon la revendication 1 ou 2, **caractérisé par le fait que** les premiers moyens comportent un filtre passe-haut (HPF) dont la fréquence de coupure est comprise entre le quart de la fréquence de la modulation et la moitié de la fréquence de la modulation.

4. Récepteur selon l'une des revendications précédentes, **caractérisé par le fait que** l'étage analogique comporte en outre des moyens de filtrage passe-bas (LPF) situés en aval des moyens de transposition, et **par le fait que** la borne d'entrée (BE) du module de compensation est connectée en aval des moyens de filtrage passe-bas.

5. Récepteur selon l'une des revendications précédentes, **caractérisé par le fait que** l'étage analogique comporte deux voies de traitement (I, Q) traitant des signaux en quadrature, et **par le fait que** le récepteur comporte un seul module de compensation dont la borne d'entrée est connectée sur l'une des voies de traitement et dont la borne de sortie est connectée sur chacune des voies de traitement.

6. Terminal distant d'un système de communication utilisant une modulation à enveloppe non constante, **caractérisé par le fait qu'**il comprend un récepteur selon l'une des revendications 1 à 5.

7. Terminal selon la revendication 6, **caractérisé par le fait qu'**il forme un téléphone mobile cellulaire.

8. Procédé de traitement d'un signal incident au sein d'un récepteur à conversion directe pour un système de communication utilisant une modulation à enveloppe non constante, dans lequel on reçoit le signal incident d'un canal de transmission, on effectue une transposition de fréquence et une amplification à gain programmable, on élabore en outre à partir d'un signal prélevé après transposition, un signal de compensation (SCP) représentatif d'un décalage statique de tension continue et un éventuel décalage dynamique de tension continue de l'étage analogique, et on soustrait avant amplification ce signal de compensation du signal émanant du signal transposé, l'élaboration du signal de compensation (SCP) comportant
• une détermination de l'enveloppe de la composante alternative du signal prélevé,
• une détermination de l'enveloppe du signal prélevé,
• une soustraction entre les deux enveloppes.

9. Procédé selon la revendication 8, **caractérisé par le fait que** l'élaboration du signal de compensation (SCP) comporte en outre un echantillonnage-blocage du signal soustrait.

10. Procédé selon la revendication 8 ou 9, **caractérisé par le fait que** la détermination de l'enveloppe de la composante alternative du signal prélevé comporte un filtrage passe-haut dont la fréquence de coupure est comprise entre le quart de la fréquence de la modulation et la moitié de la fréquence de la modulation.

11. Procédé selon l'une des revendications 8 à 10, **caractérisé par le fait qu'**il comporte en outre un filtrage passe-bas après transposition, et **par le fait qu'**on élabore le signal de compensation à partir du signal prélevé après ce filtrage passe-bas.

12. Procédé selon l'une des revendications 8 à 11, dans lequel l'étage analogique du récepteur comporte deux voies de traitement traitant des signaux en quadrature, **caractérisé par le fait qu'**on élabore le signal de compensation à partir d'un signal prélevé sur l'une des voies de traitement, et on le délivre aux deux voies de traitement.

## Patentansprüche

1. Empfänger mit Direktumsetzung für ein Kommunikationssystem mit einer Modulation mit nicht konstanter Hüllkurve, der eine analoge Stufe aufweist, um ein von einem Übertragungskanal hereinkommendes Signal zu empfangen, und Mittel zur Transponierung (Mx) sowie Mittel zur Verstärkung mit programmierbarer Leistung (PGA) aufweist, mindestens ein Kompensationsmodul (MDM, STR) aufweist, das einen Eingangsanschluss (BE) und einen Ausgangsanschluss (STR), die zwischen dem Ausgang der Transponierungsmittel (Mx) und dem Eingang der Verstärkungsmittel (PGA) geschaltet sind, besitzt und geeignet ist, zugleich einen statischen Gleichspannungs-Offset und einen eventuell auftretenden dynamischen Gleichspannungs-Offset der analogen Stufe zu kompensieren, wobei das Kompensationsmodul enthält:
- erste Mittel (MPF, PD1) zur Bestimmung der Hüllkurve der wechselnden Komponente des an dem Eingangsanschluss des Moduls anstehenden Signals,
- zweite Mittel (PD2) zur Bestimmung der Hüllkurve des an dem Eingangsanschluss des Moduls anstehenden Signals,
- erste Subtraktionsmittel (CMP), die an den Ausgang der ersten Mittel und an den Ausgang der zweiten Mittel angeschlossen sind,
- zweite Subtraktionsmittel (STR), die den Ausgangsanschluss des Moduls bilden und einen ersten, mit den Transponierungsmitteln verbundenen Eingang sowie einen zweiten, mit dem Ausgang der ersten Subtraktionsmittel (CMP) verbundenen Eingang haben.

2. Empfänger nach Anspruch 1,
**dadurch gekennzeichnet,**
**dass** das Kompensationsmodul zudem einen Sperr-Probennehmer (SAH) aufweist, der an den Ausgang der ersten Subtraktionsmittel (CMP) angeschlossen ist, und dass der zweite Eingang der zweiten Subtraktionsmittel (STR) an den Ausgang des Sperr-Probennehmers angeschlossen ist.

3. Empfänger nach Anspruch 1 oder 2,
**dadurch gekennzeichnet,**
**dass** die ersten Mittel einen Hochpassfilter (HPF) beinhalten, dessen Grenzfrequenz zwischen einem Viertel der Modulationsfrequenz und der Hälfte der Modulationsfrequenz liegt.

4. Empfänger nach einem der vorherigen Ansprüche,
**dadurch gekennzeichnet,**
**dass** die analoge Stufe außerdem Mittel zum Tiefpassfiltern (LPF) aufweist, die sich hinter den Transponierungsmitteln befinden, und dass der Eingangsanschluss (BE) des Kompensationsmoduls hinter den Mitteln zum Tiefpassfiltern angeschlossen ist.

5. Empfänger nach einem der vorherigen Ansprüche,
**dadurch gekennzeichnet,**
**dass** die analoge Stufe zwei Verarbeitungskanäle (I, Q) zur Verarbeitung von Signalen in Quadratur aufweist, und dass der Empfänger ein einziges Kompensationsmodul enthält, dessen Eingangsanschluss mit einem der beiden Verarbeitungskanäle verbunden ist und dessen Ausgangsanschluss mit jedem der Verarbeitungskanäle verbunden ist.

6. Fern-Terminal eines Kommunikationssystems, bei dem eine Modulation mit nicht konstanter Hüllkurve eingesetzt wird,
**dadurch gekennzeichnet,**
**dass** er einen Empfänger gemäß einem der Ansprüche 1 bis 5 enthält.

7. Terminal nach Anspruch 6,
**dadurch gekennzeichnet,**
**dass** er ein Handy bildet.

8. Verarbeitungsverfahren für ein ankommendes Signal in einem Empfänger mit Direktumsetzung für ein Kommunikationssystem mit einer Modulation mit nicht konstanter Hüllkurve, bei dem das von einem Übertragungskanal kommende Signal empfangen wird, eine Frequenztransponierung und eine Verstärkung mit programmierbarer Leistung erfolgt, ferner aus einem nach der Transponierung abgenommenen Signal ein Kompensationssignal (SCP) hergestellt wird, das einen statischen Gleichspannungs-Offset und einen eventuell auftretenden dynamischen Gleichspannungs-Offset der analogen Stufe darstellt, und dieses Kompensationssignal vor dem Verstärken von dem Signal, das aus dem transponierten Signal hervorgegangen ist, subtrahiert wird, wobei die Herstellung des Kompensationssignals (SCP) umfasst:
- eine Bestimmung der Hüllkurve der wechselnden Komponente des abgenommenen Signals,
- eine Bestimmung der Hüllkurve des abgenommenen Signals,
- eine Subtraktion zwischen den beiden Hüllkurven.

9. Verfahren nach Anspruch 8,
**dadurch gekennzeichnet,**
**dass** die Herstellung des Kompensationssignals (SCP) außerdem eine Sperr-Probennahme des subtrahierten Signals umfasst.

10. Verfahren nach Anspruch 8 oder 9,
**dadurch gekennzeichnet,**
**dass** die Bestimmung der Hüllkurve der wechselnden Komponente des abgenommenen Signals eine Hochpassfilterung beinhaltet, wobei die Grenzfrequenz zwischen einem Viertel der Modulationsfrequenz und der Hälfte der Modulationsfrequenz liegt.

11. Verfahren nach einem der Ansprüche 8 bis 10,
**dadurch gekennzeichnet,**
**dass** es außerdem eine Tiefpassfilterung nach der Transponierung beinhaltet, und dass das Kompensationssignal aus dem nach dieser Tiefpassfilterung abgenommenen Signal entwickelt wird.

12. Verfahren nach einem der Ansprüche 8 bis 11, bei dem die analoge Stufe des Empfängers zwei Verarbeitungskanäle zur Verarbeitung von Signalen in Quadratur aufweist,
**dadurch gekennzeichnet,**
**dass** das Kompensationssignal aus einem Signal entwickelt wird, das an einem der Verarbeitungskanäle abgenommen wird, und es an die beiden Verarbeitungskanäle abgegeben wird.

## Claims

1. Direct-conversion receiver for a communication system using modulation with non-constant envelope, comprising an analogue stage for receiving an incident signal of a transmission channel and comprising transposition means (Mx) and programmable-gain amplification means (PGA), at least one compensation module (MDM, STR) possessing an input terminal (BE) and an output terminal (STR) which are connected between the output of the transposition means (Mx) and the input of the amplification means (PGA), and which is able to compensate both for a static DC voltage offset and a possible dynamic DC voltage offset of the analogue stage, the compensation module comprising
- first means (MPF, PD1) able to determine the envelope of the AC component of the signal present at the input terminal of the module,
- second means (PD2) able to determine the envelope of the signal present at the input terminal of the module,
- first subtraction means (CMP) connected to the output of the first means and to the output of the second means,
- second subtraction means (STR) forming the output terminal of the module, and possessing a first input connected to the transposition means, and a second input connected to the output of the first subtraction means (CMP).

2. Receiver according to Claim 1, **characterized in that** the compensation module furthermore comprises a sample-and-hold facility (SAH) connected to the output of the first subtraction means (CMP), and **in that** the second input of the second subtraction means (STR) is connected to the output of the sample-and-hold facility.

3. Receiver according to either Claim 1 or Claim 2, **characterized in that** the first means comprise a high-pass filter (HPF) whose cut-off frequency lies between a quarter of the frequency of the modulation and a half of the frequency of the modulation.

4. Receiver according to one of the preceding claims, **characterized in that** the analogue stage furthermore comprises low-pass filtering means (LPF) situated downstream of the transposition means, and **in that** the input terminal (BE) of the compensation module is connected downstream of the low-pass filtering means.

5. Receiver according to one of the preceding claims, **characterized in that** the analogue stage comprises two processing pathways (I, Q) processing quadrature signals, and **in that** the receiver comprises a single compensation module whose input terminal is connected to one of the processing pathways and whose output terminal is connected to each of the processing pathways.

6. Remote terminal of a communication system using modulation with non-constant envelope, **characterized in that** it comprises a receiver according to one of Claims 1 to 5.

7. Terminal according to Claim 6, **characterized in that** it forms a cellular mobile telephone.

8. Method of processing an incident signal within a direct-conversion receiver for a communication system using modulation with non-constant envelope, in which the incident signal of a transmission channel is received, a frequency transposition and a programmable-gain amplification are carried out, a compensation signal (SCP) representative of a static DC voltage offset and a possible dynamic DC voltage offset of the analogue stage is furthermore formulated from a signal tapped off after transposition, and this compensation signal is subtracted before amplification from the signal emanating from the transposed signal, the formulation of the compensation signal (SCP) comprising
• a determination of the envelope of the AC component of the signal tapped off,
• a determination of the envelope of the signal tapped off,
• a subtraction between the two envelopes.

9. Method according to Claim 8, **characterized in that** the formulation of the compensation signal (SCP) furthermore comprises a sampling-and-holding of the subtracted signal.

10. Method according to either Claim 8 or Claim 9, **characterized in that** the determination of the envelope of the AC component of the signal tapped off comprises a high-pass filtering whose cut-off frequency lies between a quarter of the frequency of the modulation and a half of the frequency of the modulation.

11. Method according to one of Claims 8 to 10, **characterized in that** it furthermore comprises a low-pass filtering after transposition, and **in that** the compensation signal is formulated from the signal tapped off after this low-pass filtering.

12. Method according to one of Claims 8 to 11, in which the analogue stage of the receiver comprises two processing pathways processing quadrature signals, **characterized in that** the compensation signal is formulated from a signal tapped off from one of the processing pathways, and it is delivered to both processing pathways.
